# EUROPEAN PATENT SPECIFICATION

(11) **EP 2 791 550 B1**
(45) Date of publication and mention of the grant of the patent: **22.06.2016**
(21) Application number: 12820919.4
(22) Date of filing: 17.12.2012
(51) Int. Cl.: F16H 55/18

(54) **ANTI-RATTLE GEAR, GEAR TRAIN PROVIDED WITH SUCH ANTI-RATTLE GEAR, AND ENGINE PROVIDED WITH SUCH GEAR TRAIN**
ANTIRASSEL ZAHNRAD, GETRIEBEZUG MIT EINEM DERARTIGEN ANTIRASSEL ZAHNRAD, UND MOTOR VERSEHEN MIT EINEM DERARTIGEN ZAHNRAD
ENGRENAGE ANTI-CLIQUÈTEMENT, TRAIN D'ENGRENAGES COMPORTANT UN TEL ENGRENAGE ANTI-CLIQUÈTEMENT, ET MOTEUR COMPORTANT UN TEL TRAIN D'ENGRENAGES

(30) Priority: 15.12.2011 BE 201100723
(43) Date of publication of application: 22.10.2014
(73) Proprietor: VCST Industrial Products, 3800 Sint-Truiden (BE)
(72) Inventor: VAN LIESHOUT, Steven, B-2440 Geel (BE); VANDEWAL, Bart, B-3570 Alken (BE)
(74) Representative: Gevers Patents
(86) International application number: PCT/IB2012/057386
(87) International publication number: WO 2013/088421

(56) References cited:
- WO-A2-2008/142131
- DE-A1-102005 019 349
- JP-A- 63 034 033
- JP-U- H0 335 363
- JP-U- 61 202 751

## Description

The present invention relates to an anti-rattle gear according to the preamble of the first claim.

The present invention also relates to a gear train, provided with such anti-rattle gear, and an engine, provided with such gear train.

In a gear train where varying loads occur, such as for example, a drive for a camshaft, an injection pump or an air compressor, a rattle noise is often observed because, with the change of the load, also the contact of the teeth, engaging one tooth flank, changes over to the opposite tooth flank, often at a high frequency. Gear backlash is desirable to compensate for tolerances and/or expansions and to provide space for an oil film. In order to reduce the rattle noise, initially, the gear backlash is kept to a minimum. However, in some cases, a relatively large gear backlash is to be provided. For example, because use is made of different materials with different linear thermal expansion coefficients. For example, use is often made of an aluminium engine block and steel gears. If a relatively large gear backlash needs to be provided and if varying loads occur, use is frequently made of the application of one or more anti-rattle gears in a gear train.

Such an anti-rattle gear comprises a first and a second partial gear, rotation means for at least partially coaxially rotatable connecting, with respect to one another, the first and the second partial gear around a common axis of rotation, and a spring which connects the first and the second partial gear with one another to create a negative momentum between the first and the second partial gear when aligning the teeth of the first and the second partial gear by rotating the first partial gear with respect to the second partial gear to an aligned position of the first and the second partial gear with respect to one another, wherein the teeth of the first and the second partial are able to jointly mesh with the teeth of the further gear. Such a configuration allows the engaging teeth of the next gear to be meshed between the teeth of, on the one hand, the first partial gear, and on the other hand, the second partial gear. In English, an anti-rattle gear is therefore often called a "scissor gear". In the case of an optimally functioning anti-rattle gear, there is preferably little or even no gear backlash between the two meshing gears. For multiple contacts between different gears, multiple spring-loaded gears need to be provided to completely eliminate the rattle sound.

An anti-rattle gear is usually supplied in a spring-loaded condition. To this end, the anti-rattle gear comprises anchoring means which rotationally secure the first to the second partial gear with respect to one another in the aligned position. Such anchoring means comprise, for example, a plastic clip, placed over the teeth of the first partial gear and the second partial gear. After mounting the anti-rattle gear in the gear train, the aligned anti-rattle gear is activated by means of manually removing the anchoring means prior to using the gear train. According to another embodiment of the anchoring means, most often applied in heavier spring-loaded anti-rattle gears, the anchoring means comprise a locking pin. Similarly to the tooth clip, the locking pin ensures that the first and the second partial gear can be aligned before they are positioned in the gear train. The locking pin can be removed by means of a tool or by hand, if it is provided with a handle. Document JP 61-202 751 U is considered as the most relevant state of art revealing all features of the preamble of claim 1.

However, in the case of such aligned anti-rattle gears, one must have access to the gear train for activating the anti-rattle gear by means of, depending on the model used, the extraction of the locking pin or by means of the removal of a clip. However, in many cases, when driving external engine components, such as an air compressor, a hydraulic pump or a fuel injection pump, there is often no, or only with difficulty access to the gear train. As an example, an air compressor is mounted with the aid of the anti-rattle gear from the outside on the engine housing or on the gear box housing wherein the anti-rattle gear is inserted through a hole in the engine housing or gear box housing. Preferably, the air compressor should be able to be assembled and disassembled without having to open any other part of the housing as the housing is often to be oil-tight sealed. One such way of mounting is often called blind mounting.

If such a gear needs to be provided with an anti-rattle gear, then there is no possibility to tension it, or in case of a spring-loaded anti-rattle gear, to activate it by means of removing a pin or clip, unless an additional lockable cover is provided by which, for example, the pin or clip can be removed. However, such a cover is less desirable since such a cover weakens the housing and needs to provided with the necessary oil seals and screws.

Even if the gear train, for example, is situated between the engine and the gearbox, there is often no space for such an access cover.

It is therefore an object of the present invention to provide an aligned anti-rattle gear which, for example, can be used for driving such external engine components, wherein the gear can be mounted in a blind manner and wherein there is no or only a limited access to the anti-rattle gear for it activation.

This is achieved with an anti-rattle gear which exhibits the technical features of the characterizing part of the first claim.

To this end, the anchoring means are provided for releasing the anchoring of the first gear with the second gear, during operation in a predetermined gear train.

By providing such anchoring means, the anchoring of the first partial gear with the second partial gear can be released, also called activation of the anti-rattle gear, without the need for a physical access to the anti-rattle gear such that said anti-rattle gears can also be applied in applications in which the anti-rattle gear needs to be mounted in a blind manner.

According to preferred embodiments of the present invention, the anchoring means comprise a locking pin which substantially extends in the axial direction of the partial gears through at least a portion of the first and the second partial gear along a first and a second recess, provided in the first and the second partial gear, respectively. Such a locking pin allows an easy anchoring of the first partial gear to the second partial gear.

According to further preferred embodiments of the present invention, the locking pin is provided to at least partially move along the recesses to release the anchoring of the first with the second gear, and which comprises, along its longitudinal direction, a first portion having a first diameter and a second portion having a second diameter, different from the first diameter, wherein the first portion extends through the first recess and the second portion extends through the second recess, and wherein the locking pin is provided to move along the recesses such that the second portion of the locking pin moves out of the second recess, and at least a part of the first portion of the locking pin remains in the second recess. Such a locking pin allows to release the anchoring between the first and the second partial gear, without the need to remove the entire locking pin from the recesses, but only a part needs to move along the recesses.

According to further preferred embodiments of the present invention, the first and the second recess extend through the first and the second gear, respectively.

According to further preferred embodiments of the present invention, the locking pin is provided with an abutment at the first portion of the locking pin, provided to move up to the first gear when the locking pin moves through the first and the second recess, and to limit the movement of the locking pin. In such an embodiment is achieved that the locking pin can remain in the first and second partial gear after the activation of the anti-rattle gear. Consequently, it is avoided that the locking pin, when activating the anti-rattle gear, completely leaves the recesses and enters between, for example, the other gears of the gear train in which the anti-rattle gear was mounted.

According to further preferred embodiments of the present invention, the locking pin at the second portion of the locking pin is provided with a spring which is provided to move the second portion of the locking pin out of the second recess until at least a part of the first portion of the locking pin extends through the second recess. In such an embodiment of the present invention, a smoother movement of the locking pin in the recesses is obtained when activating the anti-rattle gear as the spring is provided to move the locking pin from the second recess until at least a part of the first portion of the locking pin extends through the second recess. Furthermore, in such an embodiment is avoided that the locking pin again secures the first to the second partial gear with respect to one another, and that the locking pin sufficiently moves in the recesses in order to release the anchoring of the first partial gear with respect to the second partial gear.

According to further preferred embodiments of the present invention, the locking pin comprises a protruding part which substantially axially protrudes with respect to the first and the second partial gear and which is provided to cooperate with the releasing means in order to release the anchoring between the first and the second partial gear. Such a protruding part enables to move the locking pin such that the anchorage of the first partial gear relative to the second partial gear is released.

According to preferred embodiments of the present invention, the locking pin comprises a plastically deformable material which is provided to deform at a predetermined temperature such that the anchoring between the first and the second partial gear is released. More preferably, the predetermined temperature is chosen such that it substantially corresponds to the operating temperature of the gear train, which may be a relatively high temperature, for example, in an internal combustion engine. When reaching this temperature, the anchoring is subsequently released.

According to preferred embodiments of the present invention, the anchoring means comprise an adhesive to secure the first and the second partial gear to one other. The adhesive is provided to lose its adhesive strength at a predetermined temperature such that the anchoring between the first gear and the second partial gear is released. More preferably, the predetermined temperature is chosen such that it substantially corresponds to the operating temperature of the gear train, which may be a relatively high temperature, for example, in an internal combustion engine. When reaching this temperature, the anchoring is subsequently released.

The invention further relates to a gear train with an anti-rattle gear according to the present invention, wherein the anti-rattle gear meshes with a further gear of the gear train, and wherein the anchoring means of the anti-rattle gear are provided, during operation of the gear train, to release the anchoring of the first gear with the second gear.

According to preferred embodiments of the present invention, the gear train comprises releasing means which are provided to cooperate with the protruding part of the locking pin, and are provided to release the anchoring between the first and the second partial gear.

According to preferred embodiments of the present invention, the releasing means are provided to move the locking pin along the recesses to release the anchoring of the first with the second partial gear.

The invention also relates to an engine provided with a gear train according to the present invention.

According to preferred embodiments of the present invention, the engine is an internal combustion engine.

The invention will be further elucidated with reference to the annexed figures.
Figure 1 shows an exploded view of an embodiment of the anti-rattle gear according to the present invention.
Figure 2 shows a side view of the anti-rattle gear of Figure 1.
Figure 3 shows a front view of the anti-rattle gear of Figure 1.
Figure 4 shows an overview of a blind mounting of an anti-rattle gear according to the present invention.
Figure 5 shows an exploded view of Figure 4 after mounting.
Figure 6 shows a detail of an embodiment of an anti-rattle gear according to the present invention, meshing with a further gear.
Figure 7a shows a detail of the anti-rattle gear according to Figure 1 wherein the first and the second partial gear are anchored to one another.
Figure 7b shows a detail of the anti-rattle gear according to Figure 1, wherein the anchoring between the first and the second partial gear was released.
   1. Anti-rattle gear
   2. Next gear
   3. Gear train
   4. First partial gear
   5. Second partial gear
   6. Rotation means
   7. Common axis of rotation
   8. Spring
   9. Teeth of first gear
   10. Teeth of second gear
   11. Teeth of next gear
   12. Engine
   13. Anchoring means
   14. Locking pin
   15. First recess
   16. Second recess
   17. First portion locking pin
   18. Second portion locking pin
   19. Abutment
   20. Spring
   21. Protruding part
   22. Releasing means
   23. Head locking means

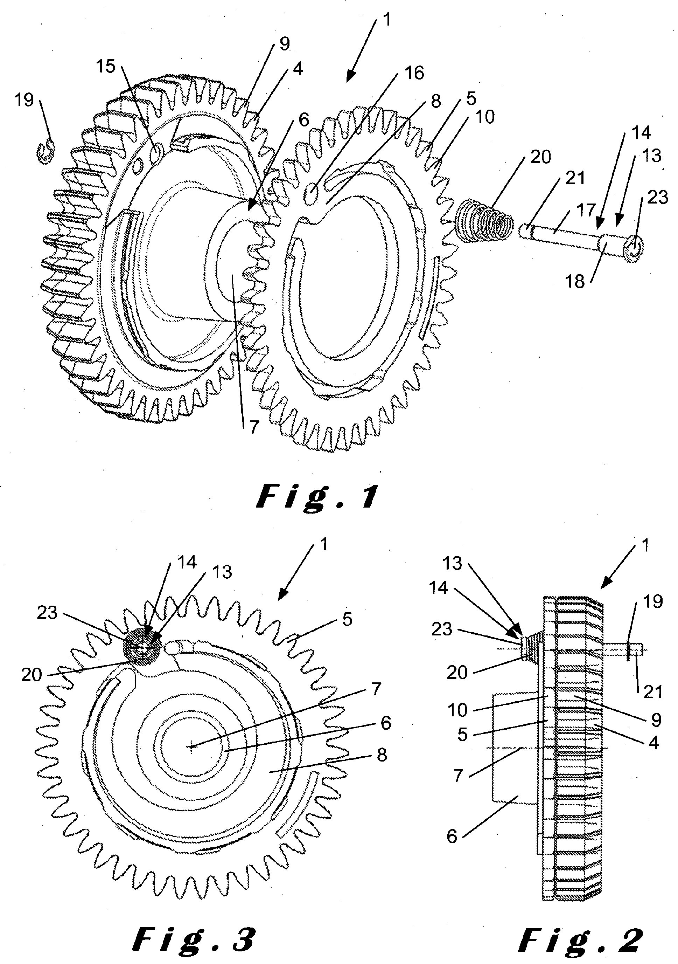

Figures 1, 2 and 3 show several views and an exploded view of an embodiment of the anti-rattle gear according to the present invention. The anti-rattle gear 1 for the avoidance of gear backlash when the anti-rattle gear 1 meshes, comprises a first partial gear 4 and a second 5 partial gear. The shape, dimension, and the material of the first and the second partial gear 4, 5 can be determined by the skilled person, for example, as a function of the application in which the gears will be used, for example, depending on the engine 12, in which the anti-rattle gear 1 will be mounted.

The anti-rattle gear 1 further comprises rotation means 6 for at least partially coaxially rotatable connecting, with respect to one another, the first 4 and the second partial gear 5 around a common axis of rotation 7.

A spring 8 connects the first 4 and the second 5 partial gear to one other to create a negative momentum between the first 4 and the second 5 partial gear when aligning the teeth 9, 10 of the first 4 and the second 5 partial gear by rotating the first partial gear 4 with respect to the second partial gear 5 into an aligned position of the first 4 and the second 5 partial gear with respect to one another, wherein the teeth 9, 10 of the first 4 and the second 5 partial gear are able to jointly engage the teeth 11 of the further gear 2. The anti-rattle gear 1 comprises anchoring means 13 which rotationally secure the first 4 and the second partial gear 5 with respect to one another in the aligned position. Such, in English called "scissor gears" are already known to the skilled person for various applications. The dimension, shape, materials, etc., of the anti-rattle gear 1 can be determined by the skilled person, depending on the application, such as, for example, the engine 12, wherein the anti-rattle gear 1 will be applied.

The anchoring means 13 are provided for releasing in a predetermined gear train 3 the anchoring of the first partial gear 4 with the second partial gear 5. The anchoring can, for instance, be released by a difference in temperature, the rotation of the anti-rattle gear 1, for example, by the centrifugal force, vibration in the engine, the geometry of the neighbouring components of the engine, etc.

The anchoring means 13 shown comprise an anchoring pin 14 which extends substantially in axial direction of the partial gears 4, 5 through at least a portion of the first 4 and the second 5 partial gear along a first 15 and a second 16 recess provided in the first 4 and the second 5 partial gear, respectively.

However, such an anchoring pin 14 is not mandatory for the present invention, and the anchoring means 13 may also comprise an adhesive for anchoring the first and the second partial gear 4, 5 to one another, wherein the adhesive is provided to lose its adhesive strength at a predetermined temperature such that the anchoring between the first and the second partial gear 4, 5 is released.

The adhesive may, for example, be a thermoplastic, for example a so-called "hot-melt". With a thermoplastic adhesive at a high temperature, such as for example, in an engine environment (90 °C - 130 °C), the shear stress will decrease significantly in comparison to the shear stress of the adhesive at room temperature. By selecting the size of the adhesive surface such that, on the one hand, the shear force is large enough at ambient temperature of storage and transport, and on the other hand is surpassed by the tangential force between the first and the second 4, 5 partial gear during operation of the engine due to the higher temperature, the tangential spring force will be activated during operation of the engine 12 and the anchoring of the first and the second partial gear 4, 5 with respect to one another will be released.

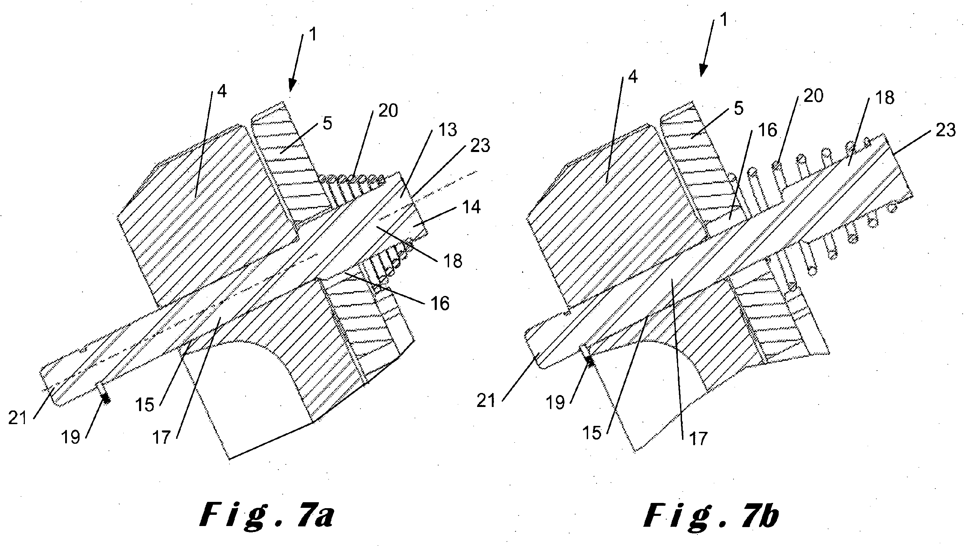

The anchoring pin 14 shown and the first and the second recesses 15, 16 are shown in more detail in Figures 7a and 7b.

The locking pin 14 is preferably provided to at least partially move along the recesses 15, 16 in order to release the anchoring of the first 4 with the second partial gear 5. This is, for instance, shown in more detail in Figures 7a and 7b in which in Figure 7a the anchored state of the anti-rattle gear 1 is shown, and in Figure 7b the no longer anchored state of the anti-rattle gear 1 is shown.

Along its longitudinal direction, the locking pin 14 preferably comprises a first portion 17 having a first diameter and a second portion 18 having a second diameter, different from the first diameter. The first portion 17 preferably extends through the first recess 15 and the second portion 18 preferably extends through the second recess 16. The locking pin 14 is preferably provided to move along the recesses 15, 16 such that the second portion 18 of the locking pin 14 moves out of the second recess 16, and at least a portion of the first portion 17 of the locking pin 14 remains in the second recess 16.

As shown in Figures 7a and 7b, the diameters of the first and the second recess 15, 16 and the diameter of the first and the second portion 17, 18 and the possible rotation of the first partial gear 4 with respect to the second partial gear 5 are preferably adjusted with respect to one another such that a part of the first portion 17, which remains in the second recess 16, leaves sufficient clearance such that the desired rotation of the first and the second partial gear 4, 5 is still possible, such as for example, in Figure 7b.

However, such an embodiment of the locking pin 14 is not mandatory, and also other embodiments of the pin 14 (not shown) are possible, for example, a locking pin 14 which comprises a plastically deformable material which is provided to deform at a predetermined temperature such that the anchoring between the first and the second partial gear 4, 5 is released. For example, a locking pin 14 may be provided which is dimensioned such that it bends only 0.1 mm at room temperature and bends more than 1 mm at an engine temperature; this difference is sufficiently large to span the maximum gear backlash such that the anti-rattle gear is activated in an engine environment once it is at operating temperature.

As shown in Figures 7a and 7b, the first and the second recess 15, 16 preferably extend through the first and the second partial gear 4, 5, respectively. However, this is not mandatory and the recesses 15, 16 can also extend only partially through the first and the second partial gear 4, 5, for example, to influence the strength of the first or the second partial gear to a lesser extent, and/or to decrease the distance to be travelled from the locking pin 14 in order to obtain an improved unlocking.

The locking pin 14 is provided with an abutment 19 at the first portion 17 of the locking pin 14, to move up to the first gear 4 when the locking pin 14 moves through the first and the second recess 15, 16, and to limit the movement of the locking pin 14 in order to avoid that the locking pin 14 enters between the other components, for example, the engine 12, and thus interferes with the operation of the engine. If possible, the abutment 19 can, however, also be omitted, for example, if it is permitted that the locking pin enters the engine 12 or, if, for example, it is provided that the locking pin remains in the second partial gear 5.

Preferably, the abutment 19, as shown in Figure 1, is designed in the form of a safety pin, arranged in a groove of the locking pin 14.

As shown in Figures 7a and 7b, preferably, the locking pin 14 is provided on the second portion 18 of the locking pin 14 with a spring 20 which is provided to move the second portion 18 of the locking pin 14 out of the second recess 16 until at least a part of the first portion 17 of the locking pin 14 extends through the second recess 16 in order to prevent the locking pin hampering again the rotation of the first and the second partial gear 4, 5. The nature of the spring 20 can be determined by the skilled person as a function of the application in which the anti-rattle gear 1 will be used. It is also possible to use alternative means than the spring to keep the locking pin 14 in the correct position.

The spring 20, as shown in Figures 7a and 7b, preferably has a conical shape, such that, in a compressed state, space can be saved.

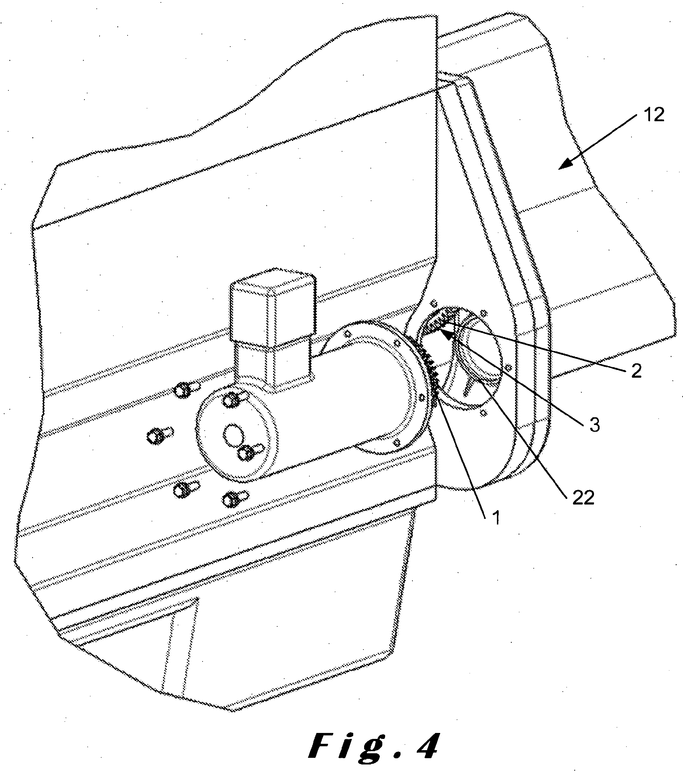

As shown in Figure 7a, the locking pin 14 preferably comprises a protruding part 21 which substantially axially protrudes with respect to the first and the second partial gear 4, 5 and which is provided to cooperate with the releasing means 22 in order to release the anchoring between the first and the second partial gear 4, 5. To this end, the releasing means 22 interfere, preferably only once, with the locking pin 14, preferably with the protruding part 21. In a preferred solution, shown in Figure 4, the releasing means 22 are implemented as a cylindrical rib, coaxially positioned with the axis of the gear, as shown in Figure 4. The cylindrical rib has a radius, equal to the radial distance from the axis of the locking pin to the axis of rotation of the gear. In this way, the tangential position of the gear with the locking pin is random when positioning the anti-rattle gear in the gear train. The releasing means 22 are provided, when attaching, for example when screwing the anti-rattle gear 1 against another component of the engine, to push the locking pin 14 away, and to release the locking of the first and the second partial gear 4, 5.

However, the releasing means 22 may also have, for example, the form of a guide, which, when sliding the locking pin 14 along the guide, for example when rotating the anti-rattle gear 1 during operation, moves the locking pin 14 along the axial direction of the partial gears 4, 5 such that the second portion 10 of the locking pin 14 moves out of the second recess 16.

The first and the second part 17, 18, as shown in Figure 7a and 7b, are eccentrically positioned bodies with respect to one another's longitudinal axis. Such a design of the first and the second part 17, 18 allows, by rotating the locking pin 14, to rotate the first and the second partial gear 4, 5 relative to one another in order to correct for small errors, for example due to tolerances, and to align the first and the second partial gear 4, 5 with respect to one another. In order to achieve a simple rotation of the locking pin 14, preferably a head 23 is provided on the locking pin 14, for example on the second part 5 as shown in Figure 1, although the head 23 can also be provided on the first part 4. For example, the head 23 is provided to cooperate with a standard key.

Preferably, the minimum difference in diameter between the first and the second portion, for example if they are substantially circular in shape, is larger than the maximum gear backlash between the teeth 11 of the next gear and the teeth 9, 10 of the first and the second gear 4, 5, often ranging between 0.2 mm and 0.4 mm.

The releasing means 22 comprise, for example, one or more cams, not shown in the figures, which are provided to cooperate with the locking pin 14 in order to release the locking between the first and the second partial gear 4, 5.

The invention also relates to a gear train with an anti-rattle gear 1 according to one of the preceding claims, wherein the anti-rattle gear 1 meshes with a further gear 2 of the gear train 3. The anchoring means 13 of the anti-rattle gear 1 can be provided, during operation of the gear train 3, to release the anchoring of the first partial gear 4 with the second partial gear 5.

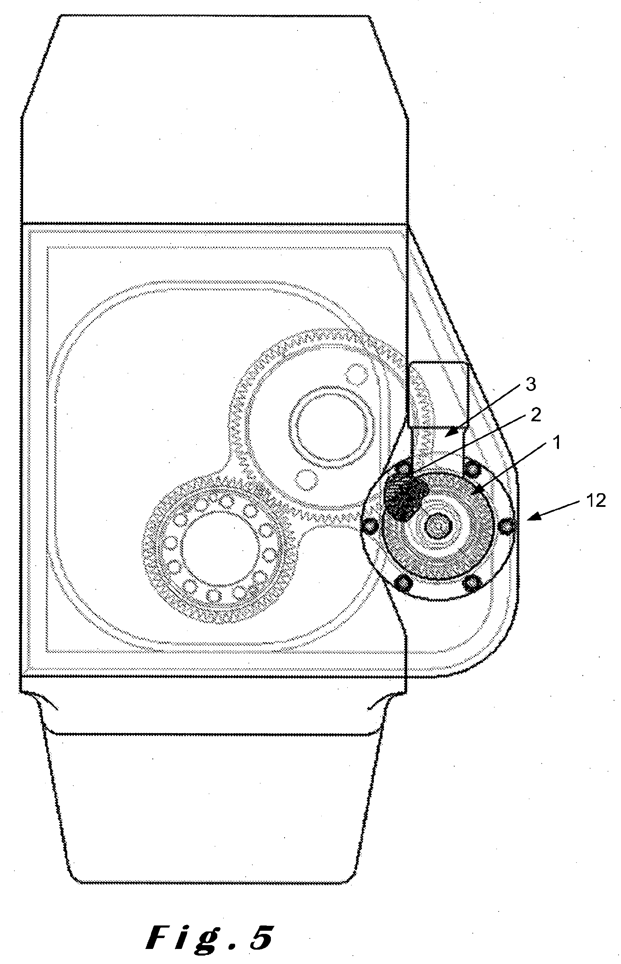

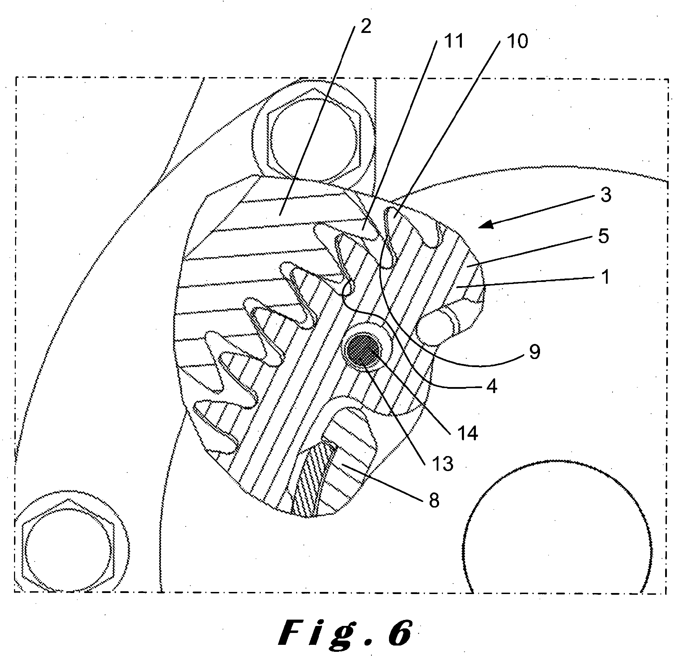

Such a gear train 3 is shown, for example, in Figures 5 and 6.

Preferably, the gear train 3 comprises releasing means 22, although not shown, which are provided to cooperate with the protruding part 21 of the locking pin 14 and which are provided to release the anchoring between the first and the second partial gear 4, 5.

The releasing means 22 are preferably provided to move the locking pin 14 along the recesses 15, 16 to release the anchoring of the first with the second partial gear 4, 5.

The invention also relates to an engine 12, provided with a gear train according to the present invention. For example, the engine 12 is shown in Figure 5. Figure 4 shows how a blind mounting is carried out for such an engine 12.

Figure 6 shows a detail of the meshing of the anti-rattle gear 1 with a further gear 2 in a gear train 3. The teeth 9, 10 of the first and the second partial gear 4, 5, hereby engage around the teeth of the next gear 2. The small difference in alignment between the teeth 9 of the first partial gear 4 and the teeth 10 of the second partial gear 5 can be observed.

## Claims

1. Anti-rattle gear (1) for the avoidance of gear backlash when the anti-rattle gear (1) meshes with a further gear (2) of a gear train (3), comprising a first (4) and a second (5) partial gear, rotation means (6) for at least partially coaxially rotatable connecting, with respect to one another, the first (4) and the second (5) partial gear around a common axis of rotation (7), and a spring (8) which connects the first (4) and the second (5) partial gear with one another to create a negative momentum between the first (4) and the second (5) partial gear when aligning the teeth (9, 10) of the first (4) and the second (5) partial gear by rotating the first partial gear (4) with respect to the second partial gear (5) into an aligned position of the first (4) and the second (5) partial gear with respect to one another, wherein the teeth (9, 10) of the first (4) and the second (5) partial gear are able to jointly mesh with the teeth (11) of the further gear (2), wherein the anti-rattle gear (1) comprises anchoring means (13) which rotationally secure the first (4) and the second (5) partial gear with respect to one another in the aligned position, **characterized in that** the anchoring means (13) are provided for releasing the anchoring of the first partial gear (4) with the second partial gear (5), during operation in a predetermined gear train (3).

2. Anti-rattle gear (1) according to claim 1, **characterized in that** the anchoring means (13) comprise a locking pin (14) extending substantially in the axial direction of the partial gears (4, 5) through at least a portion of the first (4) and the second (5) partial gear along a first (15) and a second (16) recess, provided respectively in the first (4) and the second (5) partial gear.

3. Anti-rattle gear (1) according to claim 2, **characterized, in that** the locking pin (14) is provided to at least partially move along the recesses (15, 16) to release the anchoring of the first (4) with the second (5) partial gear, and which comprises, along its longitudinal direction, a first portion (17) having a first diameter and a second portion (18) having a second diameter, different from the first diameter, wherein the first portion (17) extends through the first recess (15) and the second portion (18) extends through the second recess (16), and wherein the locking pin (14) is provided to move along the recesses (15, 16) such that the second portion (18) of the locking pin (14) moves out of the second recess (16) and at least a part of the first portion (17) of the locking pin (14) remains in the second recess (16).

4. Anti-rattle gear (1) according to claim 3, **characterized, in that** the first and the second recess (15, 16) extend through the first and the second partial gear (4, 5), respectively.

5. Anti-rattle gear according to claim 4, **characterized in that** the locking pin (14) is provided with an abutment (19) at the first portion (17) of the locking pin, (14) provided to move up to the first gear (4) when the locking pin (14) moves through the first and the second recess (15, 16), and to limit the movement of the locking pin (14).

6. Anti-rattle gear (1) according to claim 4 or 5, **characterized in that** the locking pin (14) at the second portion (18) of the locking pin (14) is provided with a spring (20) which is provided to move the second portion (18) of the locking pin (14) out of the second recess (16) until at least a part of the first portion (17) of the locking pin (14) extends through the second recess (16).

7. Anti-rattle gear according to any one of claims 2 - 6, **characterized, in that** the locking pin (14) comprises a protruding part (21) which substantially axially protrudes with respect to the first and the second partial gear (4, 5) and which is provided to cooperate with the releasing means (22) in order to release the anchoring between the first and the second partial gear (4,5).

8. Anti-rattle gear (1) according to claim 2, **characterized in that** the locking pin (14) comprises a plastically deformable material which is provided to deform at a predetermined temperature such that the anchoring between the first and the second partial gear (4, 5) is released.

9. Anti-rattle gear (1) according to any one of the preceding claims, **characterized in that** the anchoring means (13) comprise an adhesive to secure the first and the second partial gear (4, 5) to one another and wherein the adhesive is provided to lose its adhesive strength at a predetermined temperature such that the anchoring between the first and the second partial gear (4, 5) is released.

10. Gear train (3) with an anti-rattle gear (1) according to any one of the preceding claims, **characterized in that** the anti-rattle gear (1) meshes with a further gear (2) of the gear train (3), and wherein the anchoring means (13) of the anti-rattle gear (1) are provided, during operation of the gear train (3), to release the anchoring of the first partial gear (4) with the second partial gear (5).

11. Gear train (3) with an anti-rattle gear (1) as claimed in claim 10, together with at least claim 7, **characterized in that** the gear train (3) comprises releasing means (22) which are provided to cooperate with the protruding part (21) of the locking pin (14), and are provided to release the anchoring between the first and the second partial gear (4, 5).

12. Gear train (3) with an anti-rattle gear (1) according to claim 11, **characterized in that** the releasing means (22) are provided to move the locking pin (14) along the recesses (15, 16) to release the anchoring of the first with the second partial gear (4, 5).

13. Engine (12) provided with a gear train (3) according to any one of claims 10 - 12.

14. Engine (12) according to claim 13, wherein the engine (12) is an internal combustion engine.

## Patentansprüche

1. Antirassel-Zahnrad (1) zur Vermeidung von Getriebespiel, wenn das Antirassel-Zahnrad (1) in ein weiteres Zahnrad (2) eines Zahnradgetriebes (3) eingreift, welches ein erstes (4) und ein zweites (5) partielles Zahnrad, ein Drehmittel (6), das das erste (4) und das zweite (5) partielle Zahnrad, in Bezug zueinander, zumindest partiell koaxial drehbar, rund um eine gemeinsame Drehachse (7) verbindet, und eine Feder (8) umfasst, die das erste (4) und das zweite (5) partielle Zahnrad miteinander verbindet, um eine negative Impuls zwischen dem ersten (4) und dem zweiten (5) partiellen Zahnrad zu erzeugen, wenn die Zähne (9, 10) des ersten (4) und des zweiten (5) partiellen Zahnrades ausgerichtet werden, indem das erste partielle Zahnrad (4) in Bezug auf das zweite partielle Zahnrad (5) in eine ausgerichtete Position des ersten (4) und des zweiten (5) partiellen Zahnrades in Bezug zueinander gedreht wird, wobei die Zähne (9, 10) des ersten (4) und des zweiten (5) partiellen Zahnrades in der Lage sind, gemeinsam in die Zähne (11) des weiteren Zahnrades (2) einzugreifen, wobei das Antirassel-Zahnrad (1) ein Verankerungsmittel (13) umfasst, das das erste (4) und das zweite (5) partielle Zahnrad in Bezug zueinander in der ausgerichteten Position drehend sichert, **dadurch gekennzeichnet, dass** das Verankerungsmittel (13) bereitgestellt ist, um die Verankerung des ersten partiellen Zahnrades (4) mit dem zweiten partiellen Zahnrad (5) während des Betriebs in einem vorbestimmten Zahnradgetriebe (3) zu lösen.

2. Antirassel-Zahnrad (1) nach Anspruch 1, **dadurch gekennzeichnet, dass** das Verankerungsmittel (13) einen Sperrstift (14) umfasst, welcher sich im Wesentlichen in die axiale Richtung der partiellen Zahnräder (4, 5) durch zumindest einen Abschnitt des ersten (4) und des zweiten (5) partiellen Zahnrades entlang einer ersten (15) und einer zweiten (16) Aussparung ausdehnt, vorgesehen respektive im ersten (4) und im zweiten (5) partiellen Zahnrad.

3. Antirassel-Zahnrad (1) nach Anspruch 2, **dadurch gekennzeichnet, dass** der Sperrstift (14) bereitgestellt ist, um sich zumindest teilweise entlang der Aussparungen (15, 16) zu bewegen, um die Verankerung des ersten (4) mit dem zweiten (5) partiellen Zahnrad zu lösen, und welcher, entlang seiner Längsrichtung, einen ersten Abschnitt (17) mit einem ersten Durchmesser und einen zweiten Abschnitt (18) mit einem zweiten Durchmesser, anders als der erste Durchmesser, umfasst, wobei sich der erste Abschnitt (17) durch die erste Aussparung (15) und der zweite Abschnitt (18) durch die zweite Aussparung (16) ausdehnt, und wobei der Sperrstift (14) bereitgestellt ist, um sich so entlang der Aussparungen (15, 16) zu bewegen, dass sich der zweite Abschnitt (18) des Sperrstiftes (14) aus der zweiten Aussparung (16) heraus bewegt und zumindest ein Teil des ersten Abschnitts (17) des Sperrstiftes (14) in der zweiten Aussparung (16) bleibt.

4. Antirassel-Zahnrad (1) nach Anspruch 3, **dadurch gekennzeichnet, dass** sich die erste und die zweite Aussparung (15, 16) respektive durch das erste und das zweite partielle Zahnrad (4, 5) ausdehnen.

5. Antirassel-Zahnrad nach Anspruch 4, **dadurch gekennzeichnet, dass** der Sperrstift (14) mit einem Anschlag (19) am ersten Abschnitt (17) des Sperrstiftes (14) versehen ist, bereitgestellt, um sich zum ersten Zahnrad (4) hin zu bewegen, wenn sich der Sperrstift (14) durch die erste und die zweite Aussparung (15, 16) bewegt, und um die Bewegung des Sperrstiftes (14) zu begrenzen.

6. Antirassel-Zahnrad (1) nach Anspruch 4 oder 5, **dadurch gekennzeichnet, dass** der Sperrstift (14) am zweiten Abschnitt (18) des Sperrstiftes (14) mit einer Feder (20) versehen ist, welche bereitgestellt ist, um den zweiten Abschnitt (18) des Sperrstiftes (14) aus der zweiten Aussparung (16) heraus zu bewegen, bis sich zumindest ein Teil des ersten Abschnitts (17) des Sperrstiftes (14) durch die zweite Aussparung (16) ausdehnt.

7. Antirassel-Zahnrad nach irgendeinem der Ansprüche 2 bis 6, **dadurch gekennzeichnet, dass** der Sperrstift (14) ein herausragendes Teil (21) umfasst, welcher im Wesentlichen axial in Bezug auf das erste und das zweite partielle Zahnrad (4, 5) herausragt, und welcher bereitgestellt ist, um mit dem Freigabemittel (22) zusammenzuwirken, um die Verankerung zwischen dem ersten und dem zweiten partiellen Zahnrad (4, 5) zu lösen.

8. Antirassel-Zahnrad (1) nach Anspruch 2, **dadurch gekennzeichnet, dass** der Sperrstift (14) ein plastisch verformbares Material umfasst, welches bereitgestellt ist, um sich bei einer vorbestimmten Temperatur so zu verformen, dass die Verankerung zwischen dem ersten und dem zweiten partiellen Zahnrad (4, 5) gelöst wird.

9. Antirassel-Zahnrad (1) nach irgendeinem der vorigen Ansprüche, **dadurch gekennzeichnet, dass** das Verankerungsmittel (13) einen Kleber umfasst, um das erste und das zweite partielle Zahnrad (4, 5) aneinander zu befestigen, und wobei der Kleber bereitgestellt ist, um seine Haftkraft bei einer vorbestimmten Temperatur zu verlieren, sodass die Verankerung zwischen dem ersten und dem zweiten partiellen Zahnrad (4, 5) gelöst wird.

10. Zahnradgetriebe (3) mit einem Antirassel-Zahnrad (1) nach irgendeinem der vorigen Ansprüche, **dadurch gekennzeichnet, dass** das Antirassel-Zahnrad in ein weiteres Zahnrad (2) des Zahnradgetriebes (3) eingreift, und wobei das Verankerungsmittel (13) des Antirassel-Zahnrades (1) bereitgestellt ist, um während des Betriebs des Zahnradgetriebes (3) die Verankerung des ersten partiellen Zahnrades (4) mit dem zweiten partiellen Zahnrad (5) zu lösen.

11. Zahnradgetriebe (3) mit einem Antirassel-Zahnrad (1) wie beansprucht in Anspruch 10 zusammen mit zumindest Anspruch 7, **dadurch gekennzeichnet, dass** das Zahnradgetriebe (3) ein Freigabemittel (22) umfasst, welches bereitgestellt ist, um mit dem herausragenden Teil (21) des Sperrstiftes (14) zusammenzuwirken, und bereitgestellt ist, um die Verankerung zwischen dem ersten und dem zweiten partiellen Zahnrad (4, 5) zu lösen.

12. Zahnradgetriebe (3) mit einem Antirassel-Zahnrad (1) nach Anspruch 11, **dadurch gekennzeichnet, dass** das Freigabemittel (22) bereitgestellt ist, um den Sperrstift (14) entlang der Aussparungen (15, 16) zu bewegen, um die Verankerung des ersten mit dem zweiten partiellen Zahnrad (4, 5) zu lösen.

13. Motor (12) bereitgestellt mit einem Zahnradgetriebe (3) nach irgendeinem der Ansprüche 10 bis 12.

14. Motor (12) nach Anspruch 13, wobei der Motor (12) ein Verbrennungsmotor ist.

## Revendications

1. Engrenage anti-cliquètement (1) pour éviter un jeu entre les dentures quand l'engrenage anti-cliquètement (1) s'engrène dans un autre engrenage (2) d'un train d'engrenages (3), comprenant un premier (4) et un deuxième (5) engrenage partiel, des moyens de rotation (6) pour relier au moins en partie coaxialement de manière rotative, l'un par rapport à l'autre, le premier (4) et le deuxième (5) engrenage partiel autour d'un axe de rotation (7) commun, et un ressort (8) qui relie le premier (4) et le deuxième (5) engrenage partiel l'un à l'autre pour créer une force motrice négative entre le premier (4) et le deuxième (5) engrenage partiel lors de l'alignement des dents (9, 10) du premier (4) et du deuxième (5) engrenage partiel par rotation du premier engrenage partiel (4) par rapport au deuxième engrenage partiel (5) dans une position alignée du premier (4) et du deuxième (5) engrenage partiel l'un par rapport à l'autre, dans lequel les dents (9, 10) du premier (4) et du deuxième (5) engrenage partiel peuvent s'engrener conjointement dans les dents (11) de l'autre engrenage (2), dans lequel l'engrenage anti-cliquètement (1) comprend des moyens d'ancrage (13) qui fixent de manière rotative le premier (4) et le deuxième (5) engrenage partiel l'un par rapport à l'autre dans la position alignée, **caractérisé en ce que** les moyens d'ancrage (13) sont prévus pour libérer l'ancrage du premier engrenage partiel (4) avec le deuxième engrenage partiel (5), pendant le fonctionnement dans un train d'engrenages (3) prédéterminé.

2. Engrenage anti-cliquètement (1) selon la revendication 1, **caractérisé en ce que** les moyens d'ancrage (13) comprennent une goupille d'arrêt (14) s'étendant sensiblement dans la direction axiale des engrenages partiels (4, 5) à travers au moins une partie du premier (4) et du deuxième (5) engrenage partiel le long d'un premier (15) et d'un deuxième (16) évidement, prévus respectivement dans le premier (4) et le deuxième (5) engrenage partiel.

3. Engrenage anti-cliquètement (1) selon la revendication 2, **caractérisé en ce que** la goupille d'arrêt (14) est prévue pour se mouvoir au moins en partie le long des évidements (15, 16) pour libérer l'ancrage du premier (4) avec le deuxième (5) engrenage partiel et qui comprend, le long de sa direction longitudinale, une première partie (17) ayant un premier diamètre et une deuxième partie (18) ayant un deuxième diamètre différent du premier diamètre, dans lequel la première partie (17) s'étend à travers le premier évidement (15) et la deuxième partie (18) s'étend à travers le deuxième évidement (16), et dans lequel la goupille d'arrêt (14) est prévue pour se mouvoir le long des évidements (15, 16) de manière que la deuxième partie (18) de la goupille d'arrêt (14) sorte du deuxième évidement (16) et qu'au moins une partie de la première partie (17) de la goupille d'arrêt (14) reste dans le deuxième évidement (16).

4. Engrenage anti-cliquètement (1) selon la revendication 3, **caractérisé en ce que** le premier et le deuxième évidement (15, 16) s'étendent respectivement à travers le premier et le deuxième engrenage partiel (4, 5).

5. Engrenage anti-cliquètement (1) selon la revendication 4, **caractérisé en ce que** la goupille d'arrêt (14) est pourvue d'une butée (19) au niveau de la première partie (17) de la goupille d'arrêt (14) prévue pour faire monter le premier engrenage partiel (4) quand la goupille d'arrêt (14) se meut à travers le premier et le deuxième évidement (15, 16) et pour limiter le mouvement de la goupille d'arrêt (14).

6. Engrenage anti-cliquètement (1) selon la revendication 4 ou 5, **caractérisé en ce que** la goupille d'arrêt (14) au niveau de la deuxième partie (18) de la goupille d'arrêt (14) est pourvue d'un ressort (20) qui est prévu pour faire sortir la deuxième partie (18) de la goupille d'arrêt (14) du deuxième évidement (16) au moins jusqu'à ce qu'une partie de la première partie (17) de la goupille d'arrêt (14) s'étende à travers le deuxième évidement (16).

7. Engrenage anti-cliquètement selon l'une quelconque des revendications 2 - 6, **caractérisé en ce que** la goupille d'arrêt (14) comprend une partie en saillie (21) qui fait saillie de manière sensiblement axiale par rapport au premier et au deuxième engrenage partiel (4, 5) et qui est prévue pour coopérer avec les moyens de libération (22) afin de libérer l'ancrage entre le premier et le deuxième engrenage partiel (4, 5).

8. Engrenage anti-cliquètement (1) selon la revendication 2, **caractérisé en ce que** la goupille d'arrêt (14) comprend un matériau plastiquement déformable qui est prévu pour se déformer à une température prédéterminée de manière que l'ancrage entre le premier et le deuxième engrenage partiel (4, 5) soit libéré.

9. Engrenage anti-cliquètement (1) selon l'une quelconque des revendications précédentes, **caractérisé en ce que** les moyens d'ancrage (13) comprennent un adhésif pour fixer le premier et le deuxième engrenage partiel (4, 5) l'un à l'autre et dans lequel l'adhésif est prévu pour perdre sa force adhésive à une température prédéterminée de manière que l'ancrage entre le premier et le deuxième engrenage partiel (4, 5) soit libéré.

10. Train d'engrenages (3) avec un engrenage anti-cliquètement (1) selon l'une quelconque des revendications précédentes, **caractérisé en ce que** l'engrenage anti-cliquètement (1) s'engrène dans un autre engrenage (2) du train d'engrenages (3), et dans lequel les moyens d'ancrage (13) de l'engrenage anti-cliquètement (1) sont prévus pour libérer, pendant le fonctionnement du train d'engrenages (3), l'ancrage du premier engrenage partiel (4) avec le deuxième engrenage partiel (5).

11. Train d'engrenages (3) avec un engrenage anti-cliquètement (1) comme revendiqué dans la revendication 10, conjointement avec au moins la revendication 7, **caractérisé en ce que** le train d'engrenages (3) comprend des moyens de libération (22) qui sont prévus pour coopérer avec la partie en saillie (21) de la goupille d'arrêt (14) et sont prévus pour libérer l'ancrage entre le premier et le deuxième engrenage partiel (4, 5).

12. Train d'engrenages (3) avec un engrenage anti-cliquètement (1) selon la revendication 11, **caractérisé en ce que** les moyens de libération (22) sont prévus pour mouvoir la goupille d'arrêt (14) le long des évidements (15, 16) pour libérer l'ancrage du premier avec le deuxième engrenage partiel (4, 5).

13. Moteur (12) pourvu d'un train d'engrenages (3) selon l'une quelconque des revendications 10 -12.

14. Moteur (12) selon la revendication 13, dans lequel le moteur (12) est un moteur à combustion interne.
